Europäisches Patentamt

European Patent Office

Office européen des brevets

(19)

(11) Veröffentlichungsnummer : **0 045 432**
**B1**

(12) EUROPÄISCHE PATENTSCHRIFT

(45) Veröffentlichungstag der Patentschrift :
26.09.84

(51) Int. Cl.³ : **G 05 B 19/405**

(21) Anmeldenummer : 81105716.5

(22) Anmeldetag : 21.07.81

(54) Verfahren zur Programmierung bahngesteuerter Maschinen.

(30) Priorität : 29.07.80 DE 3028708

(43) Veröffentlichungstag der Anmeldung :
10.02.82 Patentblatt 82/06

(45) Bekanntmachung des Hinweises auf die Patenterteilung : 26.09.84 Patentblatt 84/39

(84) Benannte Vertragsstaaten :
AT CH FR GB IT LI NL SE

(56) Entgegenhaltungen :
US-A- 3 878 983
PROCEEDINGS OF THE THIRTEENTH ANNUAL MEE-
TING AND TECHNICAL CONFERENCE OF THE
NUMERICAL CONTROL SOCIETY, 28.-31. März 1976,
Seiten 90-102, Cincinnati, U.S.A., Spring-Lake, U.S.A.,
H. GOHREN: "Micro-processor manual input numerical control"
"TZ f. Metallbearbeitung", 74, Jg. 1980, H 2180, S. 23-
24
(73) Patentinhaber : **Dr. Johannes Heidenhain GmbH**
**Nansenstrasse 17**
**D-8225 Traunreut (DE)**

(72) Erfinder : **Miller, Walter, Dr.**
**Adalbert-Stifter-Strasse 19**
**D-8220 Traunstein (DE)**

**Beschreibung**

Die Erfindung betrifft ein Verfahren zur Programmerstellung und/oder Programmänderung gemäß dem Oberbegriff des Anspruchs 1.

Bei numerischen Bahnsteuerungen mit Dialogverkehr ist der Inhalt des Steuerprogramms sehr komplex. Daher nehmen die zugehörigen Dialogtexte einen relativ großen Umfang an. Der zur Programmerstellung und/oder Programmänderung erforderliche Zeitaufwand ist somit entsprechend hoch, vor allem, wenn auch noch der Werkzeugradius berücksichtigt und kompensiert werden soll. Aus der « TZ f. Metallbearbeitung » 74, Jg. 1980 Heft 2/80, Seiten 23-24 und der US-PS 3 878 983 ist dieser Sachverhalt deutlich.

Wird hingegen eine Bearbeitungs- oder Meßmaschine mit einer Streckensteuerung betrieben, so sind die Dialogtexte — die ja nur relativ einfache achsparallele Bewegungen betreffen — entsprechend kurz, was durch die Druckschrift « Proceedings of the Thirteenth Annual Meeting and Technical Conference of the Numerical Control Society » March 28-31, 1976, Seiten 90-102 dokumentiert wird.

Bei bahngesteuerten Maschinen kommt es jedoch häufig vor, daß auch achsparallele Bewegungen erforderlich sind. In diesen Fällen muß der vollständige Inhalt des Steuerprogrammes per Dialog abgearbeitet werden, obwohl im Grunde nur wenige Dialoge erforderlich wären.

Dieses führt zu einem überflüssigen Zeit- und damit Kostenaufwand.

Der Erfindung liegt die Aufgabe zugrunde, obige Nachteile bei Bahnsteuerungen zu beheben und mit einfachen Mitteln deren Bedienung weiter zu vereinfachen.

Diese Aufgabe wird erfindungsgemäß durch die Merkmale des Anspruchs 1 gelöst.

Die mit der Erfindung bei Bahnsteuerungen erzielten Vorteile hinsichtlich der Programmierung von achsparallelen Bewegungen, bestehen insbesondere darin, daß der Zeitaufwand bei der Programmerstellung und/oder Programmänderung und damit Maschinenstillstandszeiten reduziert werden können. Außerdem wird die Programmierung übersichtlicher und bequemer.

Vorteilhafte Ausbildungen der Erfindung entnimmt man den Unteransprüchen.

Bei einer numerisch bahngesteuerten Werkzeugmaschine mit Dialogverkehr zwischen der Bedienungsperson und der Steuerung — einer sogenannten bedienerführenden Steuerung — ist eine Anzeigeeinheit zur visuellen Darstellung von Daten, Programmsätzen und/oder Dialogtexten und eine Tastatur zum Abruf oder zur Eingabe digitaler Programmdaten vorgesehen. Die Programmsätze des Steuerprogramms zur Bahnsteuerung der Maschine werden mittels Satzbeginntasten nacheinander aufgerufen und nach Durchführung eines Dialogs auf der Anzeigeeinheit dargestellt. Der Inhalt des Steuerprogramms (Satzinhalt) ist im Vergleich zu einer numerischen Streckensteuerung sehr komplex, so daß die zugehörigen Dialogtexte einen großen Umfang annehmen.

Um eine derartige numerische Bahnsteuerung auch als einfache Streckensteuerung einsetzen zu können, sind erfindungsgemäß zusätzlich zu den Dialogen für die Bahnprogrammierung verkürzte und soweit einfachere Dialoge für die achsparallele Streckenprogrammierung im Speicher vorgesehen, die mittels eigens dafür vorgesehener Tasten aufrufbar sind.

Bei der achsparallelen Streckenprogrammierung ist noch eine angepaßte, entsprechend vereinfachte Radiuskorrektur vorgesehen, die mittels eigens dafür vorgesehener Tasten aufrufbar ist. Mittels dieser Tasten wird eine Festlegung der um den jeweiligen Radiuskorrekturwert verkürzten Verfahrstrecke (Subtraktion des Korrekturwerts) bzw. eine Festlegung der um den jeweiligen Radiuskorrekturwert verlängerten Verfahrstrecke (Addition des Korrekturwerts) bewirkt, wobei die Verfahrstrecke die jeweilige Zielposition bestimmt.

Die Erfindung wird bevorzugt bei einer Steuerung angewandt, die der Bedienungsperson noch Vorschläge hinsichtlich der einzugebenden numerischen und/oder alphanumerischen Daten bei der Erstellung der Programmsätze mittels der Dialogtexte macht. Nach veranlaßtem Beginn der Erstellung eines Programmsatzes werden die einzelnen Programmsatzteile in der durch die Dialogtexte bestimmten Reihenfolge nur nach Beantwortung der jeweiligen Dialogtexte vollständig festgelegt, wobei die Beantwortung beispielsweise in Form einer Zustimmung oder Änderung der im Dialogtext vorgeschlagenen Daten erfolgt. Die von der Steuerung vorgeschlagenen Daten sind dabei beispielsweise die bei vorangegangenen Bearbeitungsgängen zuletzt eingegebenen Daten ; damit bleibt der Bedienungsperson die wiederholte Eingabe gleicher Daten erspart.

**Ansprüche**

1. Verfahren zur Programmerstellung und/oder Programmänderung bei freiprogrammierbaren numerisch bahngesteuerten Bearbeitungs- und Meßmaschinen, mit einer Anzeigeeinheit und einer Speichereinheit für Daten, Programmsätze und/oder Dialogtexte und einer Tastatur zum Abruf und zur Eingabe digitaler Programmdaten, dadurch gekennzeichnet, daß in die Speichereinheit neben den Dialogtexten für die Bahnprogrammierung noch Dialogtexte für die achsparallele Streckenprogrammierung eingespeichert werden, die wahlweise aus der Speichereinheit abrufbar und visuell darstellbar sind.

2. Verfahren nach Anspruch 1, dadurch gekennzeichnet, daß der Dialog für die Streckenprogrammierung mittels eigens dafür vorgesehener Tasten aufrufbar ist.

3. Verfahren zur Radiuskorrektur bei numerisch bahngesteuerten Maschinen nach Anspruch 1, dadurch gekennzeichnet, daß bei der achsparallelen Streckenprogrammierung eine entsprechend vereinfachte Radiuskorrektur vorgesehen ist.

4. Verfahren nach Anspruch 3, dadurch gekennzeichnet, daß die vereinfachte Radiuskorrektur mittels eigens dafür vorgesehener Tasten aufrufbar ist.

## Claims

1. A method for preparing and/or modifying programs in freely programmable numerically contour-controlled machining and measuring machines, provided with a display unit and a storage unit for data, sentences and/or dialog texts and a keyboard for calling up and for entering digital program data, characterised in that in the storage unit, apart from the dialog texts for contour programming, dialog texts for axially parallel straight-line programming are stored which can be optionally called up from the storage unit and visually displayed.

2. A method according to Claim 1, characterised in that the dialog for the straight-line programming can be called up by means of keys especially provided for the purpose.

3. A method for radius correction in numerically contour-controlled machines according to Claim 1, characterised in that in the case of the axially-parallel straight-line programming, an appropriately simplified radius correction is provided.

4. A method according to Claim 3, characterised in that the simplified radius correction facility can be called up by means of keys especially provided for the purpose.

## Revendications

1. Procédé d'élaboration et/ou de modification de programme dans des machines d'usinage et de mesure librement programmables commandées numériquement en contournage qui comportent une unité d'affichage et une unité de mémoire pour données, phrases de programme et/ou textes de dialogue ainsi qu'un clavier pour l'appel et l'introduction de données numériques de programme, procédé caractérisé par le fait qu'à côté des textes de dialogue pour la programmation de contournage, on introduit encore dans l'unité de mémoire des textes de dialogue pour la programmation point à point parallèle aux axes, textes qui sont au choix appelables de l'unité de mémoire et représentables visuellement.

2. Procédé selon la revendication 1, caractérisé par le fait que le dialogue pour la programmation point à point est appelable au moyen de touches prévues spécialement à cet effet.

3. Procédé pour la correction de rayon dans des machines commandées numériquement en contournage selon la revendication 1, caractérisé par le fait qu'il est prévu dans la programmation point à point parallèle aux axes une correction de rayon simplifiée en conséquence.

4. Procédé selon la revendication 3, caractérisé par le fait que la correction de rayon simplifiée est appelable au moyen de touches prévues spécialement à cet effet.